# EUROPEAN PATENT APPLICATION

(11) **EP 1 422 637 A1**
(43) Date of publication of application: **26.05.2004**
(21) Application number: 02026379.4
(22) Date of filing: 25.11.2002
(51) Int. Cl.: G06F 17/30

(54) **Data display method and system**

(71) Applicant: Culture Com. Technology (Macau) Ltd., Macau (MO)
(72) Inventor: Shen, Te-Chang, 6&(I-L),Macaau (MO)
(74) Representative: Manitz, Finsterwald & Partner GbR

(57) **Abstract**

A data display method and a data display system are provided, and used to connect an input/output device of a client terminal to a data display system (for example, by means of Internet to establish network connection), wherein the data display system is linked to a website of World Wide Web to allow the client terminal to interact with the website via the input/output device. In the use of the data display method and system, the input/output device of the client terminal with a common network browser program but not installed with particular application software, can browse data resources of different file formats provided from the website; therefore, memory utilization of the input/output device of the client terminal can be reduced, and costs of software installation in an electronic device (such as PDA, computer device, etc) for an enterprise or person can also be reduced.

## Description

### FIELD OF THE INVENTION

The present invention relates to data display methods and systems, and more particularly, to a data display method and a data display system for allowing data resources of different file formats provided from a website to be displayed on an input/output device (such as computer device) of a client terminal merely having a browser program.

### BACKGROUND OF THE INVENTION

With development of LAN (local area network) from 1970s, the use of large-scale computer mainframes goes downhill, and client-server architecture blooms; moreover, as WAN (wide area network) flourishes and Internet is prospering, users are allowed to be linked via a terminal device to a host to thereby easily and rapidly obtain required data through Internet.

However, during wide application of the client-server architecture, in respect of personal computers, workstations, servers and various network appliances, they are usually installed with different operation systems such as NT, NetWare and UNIX, making users at terminal devices not able to acquire desirable data. For example, if intranet for an enterprise is constructed with a UNIX operation system, employees having personal computers of Windows cannot retrieve internal data provided from the enterprise via intranet, which thereby restricts an operational environment of users.

Moreover, as low-profile and portable electronic devices develop rapidly and succeed such as PDA (personal digital assistant), cellular phone, etc, these electronic devices may be further provided with a network function to allow users to be connected to a network at any time for prompt data retrieval. However, due to relatively small memory capacity, the electronic devices fail to be installed with various application software as personal computers with large-capacity memories, such that document files of a ".doc" format constructed by Microsoft Office may not be browsed through the use of the portable electronic devices.

Therefore, the problem to be solved herein is to integrate different network environments to provide data communication between platforms, and to apply services provided from servers to general terminal devices.

### SUMMARY OF THE INVENTION

A primary objective of the present invention is to provide a data display method and a data display system, applied to client-server architecture, to allow an input/output device (such as computer device) of a client terminal to read and retrieve data provided from servers of different operation systems.

Another objective of the invention is to provide a data display method and a data display system, applied to client-server architecture, whereby an input/output device (such as computer device) of a client terminal is not necessarily installed with particular application software but still can obtain data of file formats supported by the application software, such that a memory of the input/output device would be economically utilized to browse data of various document formats.

In accordance with the foregoing and other objectives, the present invention proposes a data display method and a data display system. The data display method is used to connect an input/output device of a client terminal to a data display system (for example, by means of Internet to establish network connection), wherein the data display system is linked to a website of World Wide Web to allow the client terminal to interact with the website via the input/output device. The data display method comprises the steps of: (1) inputting a website address or name via the client terminal to the input/output device; (2) upon receiving the website address or name from the input/output device, connecting the input/output device of the client terminal to the website via the data display system, and determining via the data display system if data resources provided from the website may be displayed on the input/output device of the client terminal; if yes, the data resources from the website being transmitted to the input/output device of the client terminal, and proceeding to step (4); if no, proceeding to step (3); (3) upon determining that the data resources from the website may not be displayed on the input/output device of the client terminal, figuring out a file format of the data resources via the data display system, and searching in a file-format versus browser-software database of the data display system for a format conversion program that may convert the file format of the data resources into one suitably displayed on the input/output device of the client terminal; converting the file format of the data resources through the use of the searched format conversion program, and transmitting the format-converted data resources via the data display system to the input/output device of the client terminal; and (4) upon receiving the data resources via the input/output device of the client terminal, displaying the data resources provided from the website via the input/output device.

The data display system comprises an input module connected to the input/output device of the client terminal, for receiving a website address or name and a request inputted from the client terminal via the input/output device; an analysis module connected to the input module, for receiving the inputted website address or name and request from the input module, and for constructing linkage to the website (for example, by means of Internet to establish network connection) according to the inputted website address or name, to correspondingly respond to the inputted request, so as to display data resources provided from the website on the input/output device of the client terminal, wherein the analysis module comprises a format search module and a format conversion module; a file-format versus browser-software database connected to the format search module, wherein when the analysis module fails to display the data resources from the website on the input/output device of the client terminal, the format search module searches in the file-format versus browser-software database for a format conversion program corresponding to a file format of the data resources from the website, and the format conversion module converts the file format of the data resources through the use of the searched format conversion program; and an output module connected to the analysis module, for transmitting the format-converted data resources from the format conversion module to the input/output device of the client terminal for display, so as to allow the client terminal to obtain the data resources provided from the website.

The data display system according to the invention can be entirely established in a server host, or internally built up in a computer peripheral device, then to be externally mounted between the client terminal and the website; in other words, the data display system is not particularly limited in its construction but depending on practical and application requirements.

In the use of the data display method and system according to the invention, the input/output device of the client terminal with a common network browser program but not installed with particular application software, can browse data resources of different file formats provided from the website; therefore, memory utilization of the input/output device of the client terminal can be reduced, and costs of software installation in an electronic device (such as PDA, computer device, etc) for an enterprise or person can also be reduced.

### BRIEF DESCRIPTION OF THE DRAWINGS

The present invention can be more fully understood by reading the following detailed description of the preferred embodiments with reference made to the accompanying drawings, wherein:
FIG. 1 is a system block diagram showing architecture of a data display system of the invention;
FIG. 2 is a schematic diagram showing data stored in a file-format versus browser-software database; and
FIG. 3 is a flowchart showing process steps involved in a data display method through the use of the data display system of the invention.

### DETAILED DESCRIPTION OF THE PREFERRED EMBODIMENT

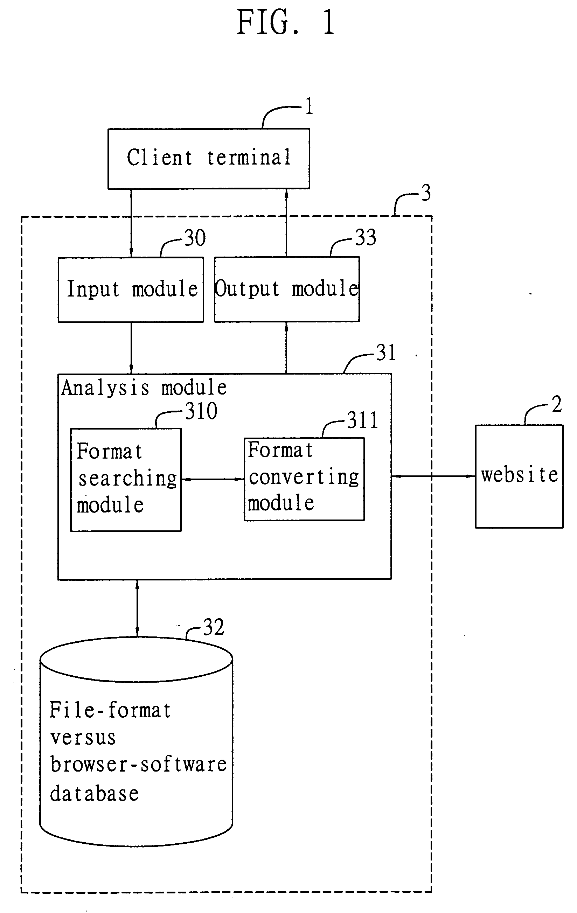

Referring to FIG. 1, it illustrates architecture of a data display system according to an embodiment of the present invention. As shown in the drawing, this data display system 3 is established in e.g. a server between a client terminal 1 and World Wide Web (WWW); after the client terminal 1 is linked via an electronic device (not shown) to the data display system 3 through a network, the client terminal 1 can then be connected to a website 2 via the data display system 3, for example, by means of Internet to construct network connection, so as to allow the client terminal 1 to interact with the website 2 through the use of the electronic device. Such an electronic device may be such as a desktop computer, notebook computer, cellular phone, PDA, etc; a computer is exemplified in the following embodiment, and this electronic device is at least installed with a network browser program, including Microsoft Internet Explorer, Netscape Navigator, etc.

The data display system 3 comprises an input module 30 connected to the client terminal 1; an analysis module 31 connected to the input module 30, and having a format search module 310 and a format conversion module 311; a file-format versus browser-software database 32 connected to the analysis module 31; and an output module 33 connected to the analysis module 31 and the client terminal 1.

The input module 30 is used to receive a website address or name and a request inputted from a computer (not shown) of the client terminal 1. Upon receiving the website address or name and request, the input module 30 activates the analysis module 31 and links the computer of the client terminal 1 to a website 2 corresponding to the inputted website address or name. Since connection between a client terminal and a website employs conventional technology, it is not to be further described with respect to its internal architecture. And, the analysis module 31 analyzes data resources provided from the website 2 and accordingly responds to the inputted request from the computer of the client terminal 1 (as detailed hereinafter), so as to display the data resources from the website 2 on the computer of the client terminal 1.

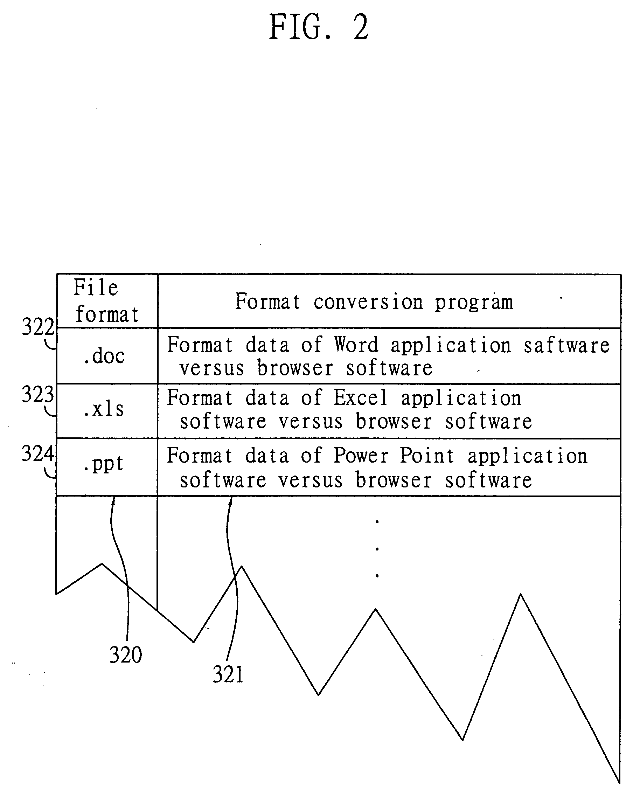

When the analysis module 31 determines that the data resources from the website 2 fail to be displayed on the computer of the client terminal 1, for example, a data file from the website 2 only being opened by Word application software, the format search module 310 would search in the file-format versus browser-software database 32 for at least one file format provided from the website 2 suitable for display on the computer of the client terminal 1, and accordingly convert the data file provided from the website 2 into the searched file format to thereby display the converted data file on the computer of the client terminal 1. As shown in FIG. 2, it illustrates data stored in the file-format versus browser-software database 32. This file-format versus browser-software database 32 is composed of a plurality of file-format converted files (322, 323, 324,...), and each of the file-format converted files (322, 323, 324,...) has a file format code 320 and a format conversion program 321 corresponding to the file format code 320. A file is normally provided with a primary file name and a secondary file name, for example, a document file constructed by Word having a secondary file name as ".doc", a document file constructed by a web page having a secondary file name as ".htm", etc; and, secondary file names of files are classified and stored in the file format code 320. Moreover, formats of files are first edited and converted into those that can be displayed by a network browser program, and then, the converted file formats are classified according to the secondary file names thereof and stored in the format conversion program 321; therefore, the file format code 320 serves as an identification code of each file-format converted file (322, 323, 324,...), and data stored in the format conversion program 321 are composed of program codes, data codes, etc. As a result, when the analysis module 31 determines that a data file provided from the website 2 cannot be displayed on the computer of the client terminal 1, the format search module 310 searches in the file-format versus browser-software database 32 for a corresponding file-format converted file according to a secondary file name of the data file, and then, the format conversion module 311 conducts format conversion for the data file from the website 2 according to the searched file-format converted file. After format conversion is complete, the converted data file is transmitted via the output module 33 to a browser of the computer of the client terminal 1; therefore, even if the computer of the client terminal 1 is not installed with particular application software, data of file formats supported by the application software can still be displayed on the computer of the client terminal 1.

In the above embodiment, the data display system 3 according to the invention is established in a server between the client terminal 1 and the website 2, but can also be built up in a website 2 depending on practical and application requirements.

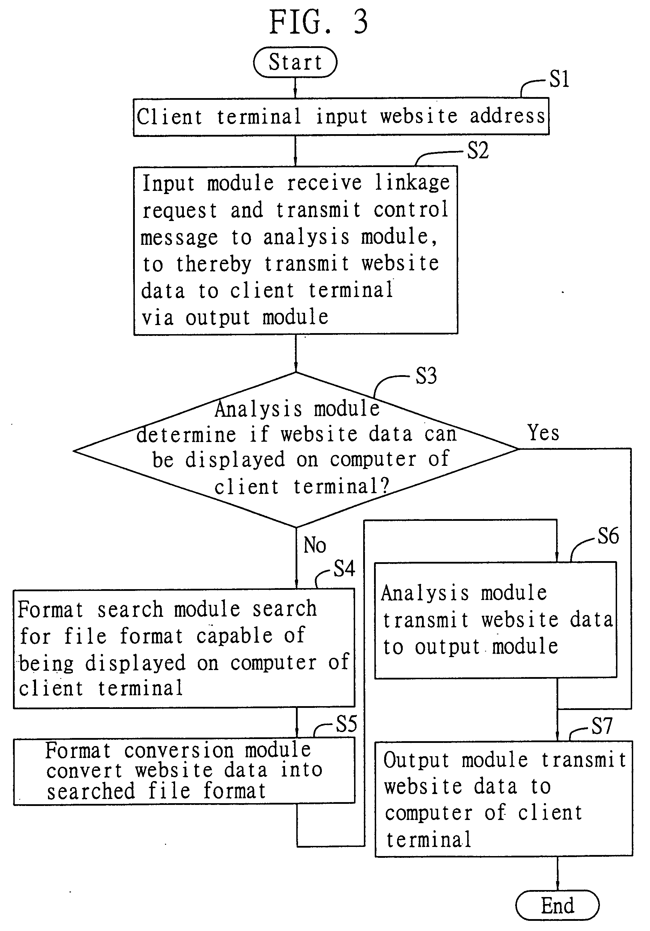

Referring to FIG. 3, it illustrates process steps involved in a data display method through the use of the data display system 3 after the client terminal 1 inputs a website address or name and a request via a computer to the data display system 3.

As shown in the drawing, in step S1, a computer of the client terminal 1 is connected to the data display system 3 according to the invention, and the client terminal 1 inputs a website address or name to an input URL box of a browser picture displayed on the computer. Then, it proceeds to step S2.

In step S2, after input of the website address or name, the client terminal 1 submits a linkage request to the data display system 3 to transmit the inputted website address or name to the data display system 3. The input module 30 receives the linkage request and produces a control message corresponding to the linkage request to the analysis module 31, so as to allow the analysis module 31 to construct linkage to a website 2 according to the control message. Then, it proceeds to step S3.

In step S3, during construction of connection between the computer of the client terminal 1 and the website 2, the analysis module 31 determines if data resources provided from the website 2 can be displayed on the computer browser of the client terminal 1; if yes, the analysis module 31 transmits the data resources from the website 2 to the output module 33, and step S7 is performed; if no, it proceeds to step S4.

In step S4, when the analysis module 31 determines that the data resources from the website 2 cannot be displayed on the computer browser of the client terminal 1, the analysis module 31 figures out a file format of the data resources, e.g. a ".doc" file, and prompts the format search module 310 to search in the file-format versus browser-software database 32 for a format conversion program that can convert the ".doc" file into a ".htm" file. Then, it proceeds to step S5.

In step S5, the format conversion module 311 uses the format conversion program searched in step S4 to perform format conversion for the data resources from the website 2. Then, it proceeds to step S6.

In step S6, the analysis module 31 transmits the format-converted data resources in step S5 to the output module 33. Then, it proceeds to step S7.

In step S7, the output module 33 receives the format-converted data resources from the analysis module 31, and displays these data resources provided from the website 2 on the computer browser of the client terminal 1.

Therefore, when an electronic device used by the client terminal 1 is not installed with software supporting data resources provided from the website 2, these data resources from the website 2 can still be displayed on the electronic device through the use of the data display method and system according to the invention.

The invention has been described using exemplary preferred embodiments. However, it is to be understood that the scope of the invention is not limited to the disclosed embodiments. On the contrary, it is intended to cover various modifications and similar arrangements. The scope of the claims, therefore, should be accorded the broadest interpretation so as to encompass all such modifications and similar arrangements.

## Claims

1. A data display method, for connecting an input/output interface of a client terminal to a data display system, wherein the data display system is linked to a website of World Wide Web to allow the client terminal to interact with the website via the input/output interface; the data display method comprising the steps of:
(1) inputting a website address or name via the client terminal to the input/output interface;
(2) upon receiving the website address or name from the input/output interface, connecting the input/output interface of the client terminal to the website via the data display system, and determining via the data display system if data resources provided from the website may be displayed on the input/output interface of the client terminal; if yes, the data resources from the website being transmitted to the input/output interface of the client terminal, and proceeding to step (4); if no, proceeding to step (3);
(3) upon determining that the data resources from the website may not be displayed on the input/output interface of the client terminal, figuring out a file format of the data resources via the data display system, and searching in a file-format versus browser-software database of the data display system for a format conversion program that may convert the file format of the data resources into one suitably displayed on the input/output interface of the client terminal; converting the file format of the data resources through the use of the searched format conversion program, and transmitting the format-converted data resources via the data display system to the input/output interface of the client terminal; and
(4) upon receiving the data resources via the input/output interface of the client terminal, displaying the data resources provided from the website via the input/output interface.

2. The data display method of claim 1, wherein in step (3), the file-format versus browser-software database is composed of a plurality of file-format converted files, each of the file-format converted files having a file format code and a format conversion program corresponding to the file format code.

3. The data display method of claim 2, wherein the file format code is classified according to a secondary file name of a file, and each of the file-format converted files has a dedicated file format code by which the file format code serves as an identification code of the corresponding file-format converted file.

4. The data display method of claim 1, wherein the input/output interface is a computer device.

5. The data display method of claim 1, wherein the input/output interface is a portable electronic device.

6. The data display method of claim 5, wherein the portable electronic device is a PDA (personal digital assistant).

7. The data display method of claim 4, wherein the computer device includes a browser for allowing the client terminal to input the website address or name and for displaying the data resources provided from the website.

8. The data display method of claim 5, wherein the electronic device includes a browser for allowing the client terminal to input the website address or name and for displaying the data resources provided from the website.

9. The data display method of claim 1, wherein the data display system is established in a server.

10. The data display method of claim 1, wherein the data display system integrates to form a computer peripheral device, and is externally mounted between the client terminal and World Wide Web.

11. A data display system, for connecting an input/output interface of a client terminal to a data display system, wherein the data display system is linked to a website of World Wide Web to allow the client terminal to interact with the website via the input/output interface; the data display system comprising:
an input module connected to the input/output interface of the client terminal, for receiving a website address or name and a request inputted from the client terminal via the input/output interface;
an analysis module connected to the input module, for receiving the inputted website address or name and request from the input module, and for constructing linkage to the website according to the inputted website address or name, to correspondingly respond to the inputted request, so as to display data resources provided from the website on the input/output interface of the client terminal, wherein the analysis module comprises a format search module and a format conversion module;
a file-format versus browser-software database connected to the format search module, wherein when the analysis module fails to display the data resources from the website on the input/output interface of the client terminal, the format search module searches in the file-format versus browser-software database for a format conversion program corresponding to a file format of the data resources from the website, and the format conversion module converts the file format of the data resources through the use of the searched format conversion program; and
an output module connected to the analysis module, for transmitting the format-converted data resources from the format conversion module to the input/output interface of the client terminal for display, so as to allow the client terminal to obtain the data resources provided from the website.

12. The data display system of claim 11, wherein the file-format versus browser-software database is composed of a plurality of file-format converted files, each of the file-format converted files having a file format code and a format conversion program corresponding to the file format code.

13. The data display system of claim 12, wherein the file format code is classified according to a secondary file name of a file, and each of the file-format converted files has a dedicated file format code by which the file format code serves as an identification code of the corresponding file-format converted file.

14. The data display system of claim 11, wherein the input/output interface is a computer device.

15. The data display system of claim 11, wherein the input/output interface is a portable electronic device.

16. The data display system of claim 15, wherein the portable electronic device is a PDA (personal digital assistant).

17. The data display system of claim 14, wherein the computer device includes a browser for allowing the client terminal to input the website address or name and for displaying the data resources provided from the website.

18. The data display system of claim 15, wherein the electronic device includes a browser for allowing the client terminal to input the website address or name and for displaying the data resources provided from the website.

19. The data display system of claim 11, wherein the data display system is established in a server.

20. The data display system of claim 11, wherein the data display system integrates to form a computer peripheral device, and is externally mounted between the client terminal and World Wide Web.
